Europäisches Patentamt

European Patent Office

Office européen des brevets

(11) Publication number: **0 671 199 A2**

## EUROPEAN PATENT APPLICATION

(21) Application number: 95102539.4

(22) Date of filing: **23.02.95**

(51) Int. Cl.6: **B01D 53/50**, B01D 53/62, B01D 53/75

(30) Priority: **09.03.94 JP 38266/94**

(43) Date of publication of application: **13.09.95 Bulletin 95/37**

(84) Designated Contracting States: **DE GB IT NL**

(71) Applicant: **THE KANSAI ELECTRIC POWER CO., INC.**
**3-22, Nakanoshima-3-chome**
**Kita-ku**
**Osaka-shi, Osaka 530 (JP)**
Applicant: **MITSUBISHI JUKOGYO KABUSHIKI KAISHA**
**5-1, Marunouchi 2-chome**
**Chiyoda-ku**
**Tokyo (JP)**

(72) Inventor: **Mimura, Tomio, c/o The Kansai Electric Power**
**Co., Inc.,**
**3-22, Nakanoshima 3-chome**
**Kita-ku,**
**Osaka-shi,**

Osaka (JP)
Inventor: **Shimojo, Shigeru, c/o The Kansai Electric Power**
**Co., Inc.,**
**3-22, Nakanoshima 3-chome**
**Kita-ku,**
**Osaka-shi,**
**Osaka (JP)**
Inventor: **Iijima, Masaki, c/o Mitsubishi Jukogyo K.K.**
**5-1, Marunouchi 1-chome**
**Chiyoda-ku,**
**Tokyo (JP)**
Inventor: **Mitsuoka, Shigeaki, c/o Mitsubishi Jukogyo K.K.**
**6-22, Kan-on-shinmachi 4-chome**
**Nishi-ku,**
**Hiroshima-shi,**
**Hieoshima-ken (JP)**

(74) Representative: **Dr. Fuchs, Dr. Luderschmidt**
**Dr. Mehler, Dipl.-Ing. Weiss Patentanwälte**
**Abraham-Lincoln-Strasse 7**
**D-65189 Wiesbaden (DE)**

(54) Method for the removal of carbon dioxide and sulfor oxides from combustion exhaust gas.

(57) This invention relates to a method for the removal of sulfur oxides and carbon dioxide contained in combustion exhaust gas. More particularly, this invention provides a method for the removal of $CO_2$ and $SO_x$ contained in combustion exhaust gas which comprises a high-performance desulfurization step for desulfurizing $SO_x$-containing combustion exhaust gas until the $SO_x$ concentration in the desulfurized gas comes within the range of 5 to 10 ppm, and a decarbonation step for bringing the desulfurized gas into contact with an aqueous solution of an alcoholic hydroxyl-containing hindered amine to remove not only $CO_2$ but also $SO_x$ so that the $SO_x$ concentration in the decarbonated gas is reduced to 1 ppm or less. In one preferred embodiment, the high-performance desulfurization step employed in the above-described method is a flue gas desulfurization step based on the wet lime-gypsum process using first and second absorption towers in which the combustion exhaust gas is brought into contact with a gypsum slurry containing 1% or less of calcium carbonate in the first absorption tower and then brought into contact with a gypsum slurry containing 1% or more of calcium carbonate in the second absorption tower.

EP 0 671 199 A2

## FIELD OF THE INVENTION AND RELATED ART STATEMENT

This invention relates to a method for the removal of $SO_x$ (sulfur oxides) and $CO_2$ (carbon dioxide) contained in combustion exhaust gas. More particularly, it relates to a method for the removal of $CO_2$ and $SO_x$ wherein $SO_x$ is removed from combustion exhaust gas with high energy efficiency and $CO_2$ is then recovered with minimization of the loss of the alcoholic hydroxyl-containing hindered amine (hereinafter referred to simply as "hindered amine") used, thus reducing the $SO_x$ concentration in the final treated gas to a highly desulfurized level of 1 ppm or less.

In recent years, the greenhouse effect of $CO_2$ has been pointed out as a cause of the warming phenomena of the earth and countermeasures to it have come to be urgently required for the purpose of protecting global environment. $CO_2$ sources cover all fields of human activities involving the combustion of fossil fuels, and its emission control will become a more important problem in the future.

Correspondingly, for use in power-generating facilities (such as thermal electric power plants) using fossil fuels in large amounts, vigorous investigations are being conducted on the method of recovering and removing $CO_2$ contained in combustion exhaust gas from a boiler by bringing the combustion exhaust gas into contact with an aqueous solution of an alkanolamine such as monoethanolamine (MEA), and the method of storing the recovered $CO_2$ without discharging it into the atmosphere.

Moreover, from the viewpoint of $CO_2$ absorption capacity and energy efficiency, a method using a hindered amine in place of monoethanolamine is also under investigation.

When fossil fuels are burned, they produce pollutants such as $SO_x$ and $NO_x$ (nitrogen oxides), though the degree varies according to type. These pollutants are considered to be the causes of air pollution and acid rain, and the emission standards thereof tend to become more and more strict.

Especially in big cities and their outskirts where fossil fuels are consumed in large amounts, there is a tendency to control the total emission of $SO_x$ and $NO_x$ from thermal electric power plants, factories, automobiles and the like.

If thermal electric power plants are taken as an example, the existing facilities are being subjected to a tightening of emission control. For facilities newly constructed in the future, minimization of the emission of these pollutants or any suitable measure to substantially eliminate the production thereof is becoming a requisite for clearing the total emission control.

With regard to flue gas desulfurization, a variety of dry and wet processes have been proposed in the past. One typical example is the so-called wet lime-gypsum process in which

$SO_x$ is absorbed into an aqueous slurry of powdered limestone (calcium carbonate) and recovered in the form of gypsum. As a specific example thereof, a high-performance flue gas desulfurization process as will be described later is proposed in Japanese Patent-Laid Open No. 243520/'92.

According to this process, combustion exhaust gas can be desulfurized to an $SO_x$ concentration of 10 ppm or less and, under certain conditions, 1 ppm or less. Moreover, gypsum having a very high purity can be obtained as a by-product.

In order to substantially remove both $CO_2$ and $SO_x$ from combustion exhaust gas, it is conceivable to employ a combination of these existing removal techniques, in particular, a combination of the above-described high-performance flue gas desulfurization process and a decarbonation process using a hindered amine. Even in the above-described high-performance flue gas desulfurization process, however, the consumption of power (i.e., energy such as electric power) tends to increase as the $SO_x$ concentration in the treated gas is reduced.

On the other hand, if a treated gas having been desulfurized to an $SO_x$ concentration of greater than 10 ppm is subjected to the succeeding decarbonation step, not only decarbonation but also desulfurization is achieved because the remaining $SO_x$ also reacts with the hindered amine (in the case of a monoamine, one mole of $SO_x$ combines with two moles of the hindered amine). However, the products formed as a result of the reaction of $SO_x$ with the hindered amine are stable salts which cannot be easily regenerated under ordinary conditions in the hindered amine regeneration step and, therefore, accumulate gradually in the system of the decarbonation step. Eventually, these stable salts are discharged from the system, causing a loss of the expensive hindered amine.

Thus, it would be desirable to provide a method for the treatment of combustion exhaust gas to substantially remove both $CO_2$ and $SO_x$ therefrom which can minimize the energy consumption in the desulfurization step and the loss of expensive hinder amines.

2

## SUMMARY OF THE INVENTION

In view of the above-described problems, the present inventors made intensive investigations on the method of removing both $SO_x$ and $CO_2$ contained in combustion exhaust gas, and discovered that it is very effective to desulfurize combustion exhaust gas in a high-performance desulfurization step until a certain $SO_x$ concentration is attained, and then decarbonate the desulfurized gas in a decarbonation step.
The present invention has been completed on the basis of this discovery.

According to the present invention, there is provided a method for the removal of $CO_2$ and $SO_x$ contained in combustion exhaust gas which comprises a high-performance desulfurization step for desulfurizing $SO_x$-containing combustion exhaust gas until the $SO_x$ concentration in the desulfurized gas comes within the range of 5 to 10 ppm, and a decarbonation step for bringing the desulfurized gas into contact with an aqueous solution of an alcoholic hydroxyl-containing hindered amine to remove not only $CO_2$ but also $SO_x$ so that the $SO_x$ concentration in the decarbonated gas is reduced to 1 ppm or less.

In one preferred embodiment of the invention, the high-performance desulfurization step employed in the above-described method is a flue gas desulfurization step based on the wet lime-gypsum process using first and second absorption towers in which the combustion exhaust gas is brought into contact with a gypsum slurry containing 1% or less of calcium carbonate in the first absorption tower and then brought into contact with a gypsum slurry containing 1% or more of calcium carbonate in the second absorption tower.

In another preferred embodiment of the invention, the alcoholic hydroxyl-containing hindered amine used in the above-described method is selected from the group consisting of (a) a compound having a primary amino group attached to a tertiary carbon atom having two unsubstituted alkyl groups, (b) a compound having a secondary amino group whose N atom is attached to a group having a chain of 2 or more carbon atoms including the bonding carbon atom, and (c) a compound having a tertiary amino group in which, of the three groups attached to the tertiary amino group, at least one has a chain of 2 or more carbon atoms including the bonding carbon atom and two are unsubstituted alkyl groups.

According to the method of the present invention, $SO_x$ present in the treated gas can be almost completely eliminated by desulfurizing combustion exhaust gas in a high-performance desulfurization step until an $SO_x$ concentration of 5 to 10 ppm is attained, and then decarbonating the desulfurized gas in a decarbonation step.
Moreover, the power consumption in the desulfurization step and the loss of hindered amine in the decarbonation step can be minimized.

## BRIEF DESCRIPTION OF THE DRAWINGS

Fig. 1 is a flow diagram illustrating an exemplary process for treating combustion exhaust gas to which the present invention can be applied;
Fig. 2 is a schematic view illustrating one embodiment of the high-performance desulfurization step employed in the present invention; and
Fig. 3 is a schematic view illustrating one embodiment of the decarbonation step employed in the present invention.

## DETAILED DESCRIPTION OF PREFERRED EMBODIMENTS

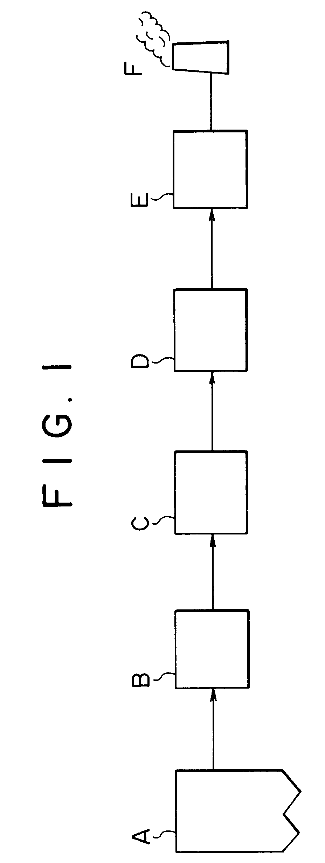

Fig. 1 illustrates an exemplary process for treating combustion exhaust gas to which the present invention can be applied. In Fig. 1, A designates a boiler using coal, naphtha, heavy oil or the like as fuel. B designates a denitration step in which nitrogen oxides ($NO_x$) are removed, for example, by injecting ammonia into combustion exhaust gas to reduce nitrogen oxides in the presence of a catalyst and thereby decompose them into nitrogen and water. C designates a dust collection step using an electrostatic precipitator or the like, D designates a high-performance desulfurization step, E designates a decarbonation step, and F designates a stack.

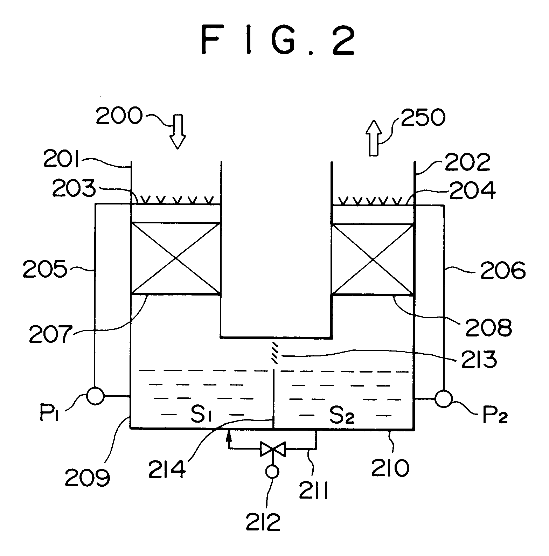

No particular limitation is placed on the high-performance desulfurization step employed in the present invention, so long as combustion exhaust gas can be treated so as to reduce the $SO_x$ concentration in the treated gas to 10 ppm or less.
As an example of this high-performance desulfurization step, it is especially preferable to employ the process described in the aforementioned Japanese Patent Laid-Open No. 243520/'92 entitled "High-Performance Flue Gas Desulfurization Process". This process is illustrated in Fig. 2.

3

In Fig. 2, combustion exhaust gas 200 is introduced into a first absorption tower 201 where it is brought into contact (e.g., parallel-flow contact) with a slurry $S_1$ (i.e., a gypsum slurry containing 1% or less of calcium carbonate) which is an absorbent placed in a first reservoir 209, conducted through a pump $P_1$ and a first circulation line 205, and sprayed from a first nozzle 203. Then, combustion exhaust gas 200, together with slurry $S_1$, descends through an optionally installed first packed tower 207 where it is desulfurized by the action of calcium carbonate in slurry $S_1$.

Thereafter, slurry $S_1$ is retained in first reservoir 209, whereas the desulfurized exhaust gas is transferred to a second absorption tower 202, for example, through a space above a partition wall 214 separating first reservoir 209 from a second reservoir 210.

In this first absorption tower 201, $SO_x$ in combustion exhaust gas 200 containing, for example, about 1,000 ppm of $SO_x$ is absorbed and removed by reaction with calcium carbonate in slurry $S_1$, so that the $SO_x$ concentration is reduced to the order of several tens of ppm. Since the calcium carbonate concentration in slurry $S_1$ is 1% or less, the gypsum obtained in a slurry withdrawal line (not shown) provided in first circulation line 205 after the absorption of $SO_x$ has a high purity. On the other hand, the amount of calcium carbonate present in slurry $S_1$ becomes insufficient to absorb and remove $SO_x$ to a full degree. Accordingly, it is necessary to regulate the pH of slurry $S_1$ as described later, for example, while measuring the pH of slurry $S_1$ in first reservoir 209 with the aid of a pH meter.

After being transferred to second absorption tower 202, the desulfurized exhaust gas is brought into contact (e.g., counterflow contact) with a slurry $S_2$ (i.e., a slurry containing 1% or more of calcium carbonate) which is an absorbent placed in a second reservoir 210, conducted through a pump $P_2$ and a second circulation line 206, and sprayed from a second nozzle 204. Then, the desulfurized exhaust gas passes through an optionally installed second packed tower 208 where it is further desulfurized by the action of calcium carbonate in slurry $S_2$. The exhaust gas, which was desulfurized in first absorption tower 201 to an $SO_x$ concentration of several tens of ppm, is desulfurized to an $SO_x$ concentration of 10 ppm or less. Finally, the resulting desulfurized exhaust gas 250 is discharged from the second absorption tower. It is to be understood that this second absorption tower has the ability to reduce the $SO_x$ concentration in the treated gas to as low as 1 ppm.

Since only a small amount of $SO_x$ is absorbed into slurry $S_2$ which is an absorbent circulating through second absorption tower 202, the decrease of the calcium carbonate concentration in slurry $S_2$ of second reservoir 210 is slight.

However, since the calcium carbonate concentration decreases gradually, calcium carbonate should be supplied to second reservoir 210 in an amount corresponding to the decrease.

Accordingly, the calcium carbonate concentration in slurry $S_2$ of second reservoir 210 is always higher than that in slurry $S_1$ of first reservoir 209. Thus, slurry $S_2$ is added to slurry $S_1$ of first reservoir 209, for example, by way of a transfer line 211 and a control valve 212. This serves to elevate the pH of slurry $S_1$ of first reservoir 209 and thereby maintain its desulfurizing ability. In the passage between first absorption tower 201 and second absorption tower 202 (i.e., the space above partition wall 214 shown in Fig. 2), a demister 213 is preferably disposed so that any scattered mist may be prevented from being entrained by the exhaust gas and transferred from first absorption tower 201 to second absorption tower 202.

In the high-performance desulfurizer illustrated in Fig. 2, the reason why combustion exhaust gas is brought into contact with a gypsum slurry containing 1% or less of calcium carbonate in first absorption tower 201 is that it is desired to enhance the purity of gypsum formed as a by-product. The relationship between the calcium carbonate concentration in the slurry and the purity of gypsum formed as a by-product is such that, when the former is 1.4%, 1.0%, 0.6% and 0.2%, the latter is 93%, 95%, 97% and 99%, respectively. Since it is generally preferable to obtain gypsum having a purity of not less than 95%, the calcium carbonate concentration in the slurry of first absorption tower 201 is selected to be 1 ppm or less on the basis of the above-described data. In contrast, it is not intended to obtain gypsum from slurry $S_2$ in the reservoir of second absorption tower 202. Since higher concentrations of calcium carbonate used as absorbent are desirable for the purpose of minimizing the $SO_x$ concentration in the resulting desulfurized gas 250, the calcium carbonate concentration in the slurry of second absorption tower 202 is selected to be 1 ppm or more.

It is preferable to employ the above-described desulfurizer in the present invention. In this case, the flow rates of the slurries need to be increased as the desulfurization level is raised. This causes an increase in the power required for the operation of pumps and the like, and eventually an increase in the power consumption of the desulfurizer. On the other hand, if the desulfurization level is lowered, the $SO_x$ remaining in the desulfurization step reacts with the hindered amine used in the succeeding decarbonation step (as described later) and undesirably causes an increased loss of the hindered amine. In the present invention, therefore, it is important to determine the desulfurization level in the desulfurization step so that the $SO_x$

concentration in the treated gas will be in the range of 5 to 10 ppm.

In the present invention, the combustion exhaust gas which has been desulfurized in the high-performance desulfurization step is then subjected to a decarbonation step in which it is brought into contact with an aqueous solution of an alcoholic hydroxyl-containing hindered amine to remove $CO_2$ therefrom.

Thus, the $SO_x$ concentration in the decarbonated gas can be reduced to 1 ppm or less.

A variety of alcoholic hydroxyl-containing hindered amines may be used to prepare the aqueous hindered amine solution for the absorption of $CO_2$. However, it is preferable to use a compound selected from the group consisting of (a) a compound having an alcoholic hydroxyl group and a primary amino group attached to a tertiary carbon atom having two unsubstituted alkyl groups, (b) a compound having an alcoholic hydroxyl group and a secondary amino group whose N atom is attached to a group having a chain of 2 or more carbon atoms including the bonding carbon atom, and (c) a compound having an alcoholic hydroxyl group and a tertiary amino group in which, of the three groups attached to the tertiary amino group, at least one has a chain of 2 or more carbon atoms including the bonding carbon atom and two are unsubstituted straight-chain or branched alkyl groups. These compounds may be used in admixture of two or more, or in combination with other compounds used for the purpose of promoting $CO_2$ absorption.

In the compound (a) preferably used in the present invention (i.e., the compound having, in the molecule, an alcoholic hydroxyl group and a primary amino group attached to a tertiary carbon atom having two unsubstituted alkyl groups), the unsubstituted alkyl groups may be straight-chain or branched and may be the same or different. Although these alkyl groups can be, for example, methyl, ethyl, propyl or isopropyl groups, it is preferable that both of them are methyl groups. Specific examples of the compound (a) include 2-amino-2-methyl-1-propanol, 3-amino-3-methyl-2-pentanol, 2,3-dimethyl-3-amino-1-butanol, 2-amino-2-ethyl-1-butanol, 2-amino-2-methyl-3-pentanol, 2-amino-2-methyl-1-butanol, 3-amino-3-methyl-1-butanol, 3-amino-3-methyl-2-butanol, 2-amino-2,3-dimethyl-3-butanol, 2-amino-2,3-dimethyl-1-butanol and 2-amino-2-methyl-1-pentanol. Among others, 2-amino-2-methyl-1-propanol (AMP) is especially preferred.

In the compound (b) preferably used in the present invention (i.e., the compound having, in the molecule, an alcoholic hydroxyl group and a secondary amino group whose N atom is attached to a group having a chain of 2 or more carbon atoms including the bonding carbon atom), the group having a chain of 2 or more carbon atoms including the bonding carbon atom usually comprises, for example, a hydroxyl-substituted alkyl group of 2 to 5 carbon atoms and preferably a straight-chain or branched alkyl group of 2 to 3 carbon atoms which may have a hydroxyl substituent. Specific examples of the compound (b) include 2-(ethylamino)-ethanol, 2-(methylamino)-ethanol, 2-(n-propylamino)-ethanol, 2-(isopropylamino)-ethanol, 2-(n-butylamino)-ethanol, 2-(sec-butylamino)-ethanol, 2-(i-butylamino)-ethanol, 2-(t-butylamino)-ethanol, 1-(ethylamino)-ethanol, 1-(methylamino)-ethanol, 1-(n-propylamino)-ethanol and 1-(isopropylamino)-ethanol. Among others, 2-(ethylamino)-ethanol (EAE), 2-(n-butylamino)-ethanol (BAE) and 2-(isopropylamino)-ethanol (IPAE) are especially preferred.

In the compound (c) preferably used in the present invention (i.e., the compound having, in the molecule, an alcoholic hydroxyl group and a tertiary amino group in which, of the three groups attached to the tertiary amino group, at least one has a chain of 2 or more carbon atoms including the bonding carbon atom and two are unsubstituted alkyl groups), the two unsubstituted alkyl groups may be straight-chain or branched and may be the same or different. These alkyl groups can be, for example, methyl, ethyl, propyl or isopropyl groups. Specific examples of the compound (c) include 2-(dimethylamino)-ethanol, 2-(diethylamino)-ethanol, 2-(ethylmethylamino)-ethanol, 1-(dimethylamino)-ethanol, 1-(diethylamino)-ethanol, 1-(ethylmethylamino)-ethanol, 2-(diisopropylamino)-ethanol, 1-(diethylamino)-2-propanol, 3-(diethylamino)-1-propanol, 3-(dimethylamino)-1-propanol, 4-(dimethylamino)-1-butanol and 2-(dimethylamino)-2-methyl-1-propanol. Among others, 2-(diethylamino)-ethanol (DEAE) is especially preferred.

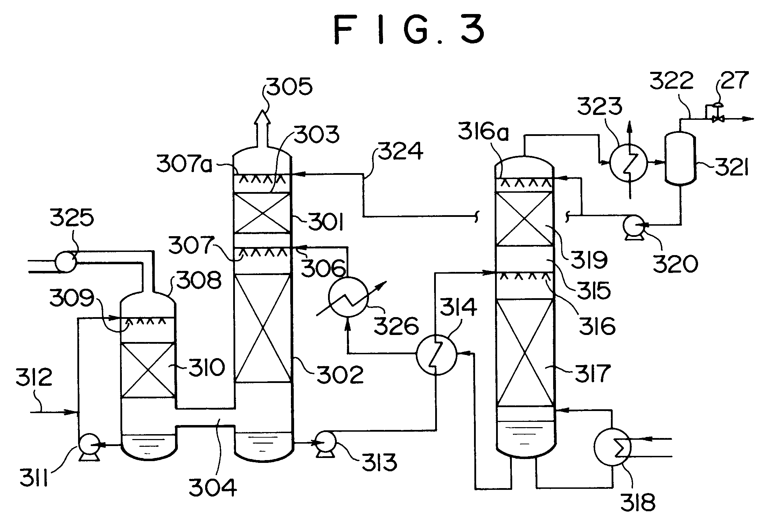

Although no particular limitation is placed on the process for removing $CO_2$ contained in combustion exhaust gas by use of an aqueous hindered amine solution (hereinafter abbreviated as "HA solution"), one embodiment thereof is described with reference to Fig. 3. In Fig. 3, only major equipment is illustrated and incidental equipment is omitted.

The system illustrated in Fig. 3 has a decarbonation tower 301, a lower packed region 302, an upper packed region or trays 303, a combustion exhaust gas inlet port 304 to the decarbonation tower, a decarbonated combustion exhaust gas outlet port 305, an HA solution inlet port 306, nozzles 307 and 307a, an optionally installed combustion exhaust gas cooler 308, a nozzle 309, a packed region 310, a humidifying and cooling water circulating pump 311, a make-up water supply line 312, a $CO_2$-loaded HA solution withdrawing pump 313, a heat exchanger 314, an HA solution regeneration tower (hereinafter abbreviated as "regeneration tower") 315, nozzles 316 and 316a, a lower packed region 317, a regenerative heater (or reboiler) 318, an upper packed region 319, a reflux water pump 320, a $CO_2$ separator 321, a

EP 0 671 199 A2

recovered $CO_2$ discharge line 322, a regeneration tower reflux condenser 323, a regeneration tower reflux water supply line 324 and a combustion exhaust gas feed blower 325.

In Fig. 3, the combustion exhaust gas having passed through the desulfurization step is forced into combustion exhaust gas cooler 308 by means of combustion exhaust gas feed blower 325, humidified and cooled in packed region 310 by contact with humidifying and cooling water from nozzle 309, and then conducted to decarbonation tower 301 through combustion exhaust gas inlet port 304. The humidifying and cooling water which has come into contact with the combustion exhaust gas is collected in the lower part of combustion exhaust gas cooler 308 and recycled to nozzle 309 by means of pump 311. Since the humidifying and cooling water is gradually lost by humidifying and cooling the combustion exhaust gas, make-up water is supplied through make-up waster supply line 312.

In the lower packed region 302 of decarbonation tower 301, the combustion exhaust gas forced thereinto is brought into counterflow contact with an HA solution having a predetermined concentration and sprayed from nozzle 307.

Thus, $CO_2$ contained in the combustion exhaust gas is removed by absorption into the HA solution and the decarbonated combustion exhaust gas passes into upper packed region 303.

The HA solution supplied to decarbonation tower 301 absorbs $CO_2$ and the resulting heat of reaction makes the HA solution hotter than its temperature at inlet port 306. This HA solution is withdrawn by $CO_2$-loaded HA solution withdrawing pump 313, heated by heat exchanger 314, and introduced into regeneration tower 315.

In regeneration tower 315, the HA solution is regenerated through heating by regenerative heater 318, cooled by heat exchanger 314 and optionally installed cooler 326, and returned to decarbonation tower 301. In the upper part of regeneration tower 315, the $CO_2$ separated from the HA solution is brought into contact with reflux water sprayed from nozzle 316a, cooled by regeneration tower reflux condenser 323, and introduced into $CO_2$ separator 321 where $CO_2$ is separated from reflux water obtained by condensation of water vapor entrained thereby and then conducted to a $CO_2$ recovery step through recovered $CO_2$ discharge line 322. Part of the reflux water is recycled to regeneration tower 315 by means of reflux water pump 320, while the remainder is supplied to the upper nozzle 307a of decarbonation tower 301 through regeneration tower reflux water supply line 324.

In the present invention, the combustion exhaust gas having been treated in the high-performance desulfurization step illustrated at D in Fig. 1 and in Fig. 2 contains $SO_x$ at a concentration of 5 to 10 ppm. By treating combustion exhaust gas in the above-described decarbonation step, the remaining $SO_x$, together with $CO_2$, is almost completely removed. The reason for this is that the HA used in the decarbonation step as described above reacts with the remaining $SO_x$. Some salts formed as a result of this reaction are so stable that it is usually impossible to reproduce the HA therefrom in regeneration tower 315. Consequently, such stable salts accumulate gradually in the system of the decarbonation step, so that it is necessary to treat the bottom liquor of regeneration tower 315, for example, by periodically operating a reclaimer (not shown) which is an apparatus for removing accumulated heat-stable salts. In this reclaimer, the bottom liquor is heated to a temperature (e.g., about 135°C) higher than the heating temperature of reboiler 318 (usually about 120°C). While the resulting HA and water are returned from the reclaimer to the decarbonation step, the remaining stable salts are concentrated as sludge in the reclaimer and finally discharged from the system.

Thus, since the HA converted to stable salts cannot be recovered, this loss must be made up in the decarbonation step. For this reason, it is preferable to minimize the $SO_x$ concentration in the combustion exhaust gas to be treated in the decarbonation step. However, as described above, an elevation of the desulfurization level in the desulfurization step installed prior to the decarbonation step causes an increase in electric power consumption. Accordingly, the desulfurization step is carried out in such a way that the $SO_x$ concentration in the treated gas is in the range of 5 to 10 ppm. This makes it possible not only to avoid any increased electric power consumption in the desulfurization step, but also to minimize the loss of HA in the decarbonation step and, moreover, remove $SO_x$ almost completely (i.e., to a concentration of 1 ppm or less) from the treated gas having passed through the decarbonation step.

$NO_x$ contained in the combustion exhaust gas is removed in the desulfurization step B illustrated in Fig. 1, but it is usually impossible to remove $NO_x$ completely. Of the remaining $NO_x$, $NO_2$ is removed to some extent in the above-described decarbonation step. Thus, the present invention also serves to reduce the $NO_x$ concentration in the treated gas.

The present invention is further illustrated by the following examples.

6

### Reference Example 1

Using a desulfurizer as illustrated in Fig. 2, combustion exhaust gas having a $SO_2$ concentration of 1,000 ppm was treated under the conditions given below. The power (electric power) required per 1,000,000 $Nm^3/h$ of combustion exhaust gas and the $SO_2$ concentration in the treated gas are shown in Table 1.

(Treating conditions)

L (slurry volume)/G (exhaust gas volume) ratio: 25.6
Height of first absorption tower: 19 m
Height of second absorption tower: 17 m
Percentage of calcium carbonate in solid content of slurry of first absorption tower: 1 wt.% or less
Percentage of calcium carbonate in solid content of slurry of second absorption tower: 1 wt.% or more
Degree of desulfurization in first absorption tower: 98%
Degree of desulfurization in second absorption tower: 95%
Flow rate of combustion exhaust gas being treated: 1,000,000 $Nm^3/h$
Temperature of combustion exhaust gas being treated: 50°C
Temperature of slurries: 50°C

(Results of treatment)

Table 1

| | $SO_2$ in treated gas (ppm) | Electric power (kW) | | |
|---|---|---|---|---|
| | | Pumps | Fans | Total |
| Reference Example 1 | 1 | 3760 | 660 | 4420 |

### Examples 1-5 and Reference Example 2

Using a wetted wall absorber as a small-sized model test apparatus for the decarbonation step illustrated in Fig. 3, absorption tests were carried out by bringing a gas having controlled $CO_2$, $O_2$ (oxygen), $SO_2$ and $NO_2$ concentrations into contact with an aqueous HA solution. The test results thus obtained are shown in Table 2.

The testing conditions common to the various tests are given below. The $CO_2$ and $O_2$ concentrations in the feed gas were adjusted to their typical concentrations in combustion exhaust gas from boilers.

(Common testing conditions)

Type of $CO_2$ absorption tower: Wetted wall absorption tower Height of $CO_2$ absorption tower: 7,500 mm
$CO_2$ concentration in feed gas: 9 vol.%
$O_2$ concentration in feed gas: 9 vol.%
Temperature of feed gas: 60°C
Flow rate of feed gas: 2.0 $Nm^3/h$ (dry)
HA concentration in HA solution: 30 wt.%
Flow rate of HA solution: 4.0 liters/h
Temperature of HA solution: 60°C
L (HA solution volume)/G (feed gas volume) ratio: 2.0 liters/$Nm^3$
Superficial velocity of gas: 3.1 Nm/s

7

(Test results)

Table 2

| | Hindered amine | CO$_2$ absorption data | |
| --- | --- | --- | --- |
| | | Volume ratio of CO$_2$ (Nm$^3$) to HA solution (m$^3$) | Molar ratio of CO$_2$ to HA solution |
| Example 1 | EAE | 41.2 | 0.55 |
| Example 2 | AMP | 33.8 | 0.45 |
| Example 3 | DEAE | 22.7 | 0.40 |
| Example 4 | IPAE | 34.6 | 0.53 |
| Example 5 | BAE | 27.8 | 0.49 |
| Reference Example 2 | MEA | 52.4 | 0.48 |

Table 2 (Continued)

| | SO$_2$ absorption data | | |
| --- | --- | --- | --- |
| | Inlet concentration (ppm) | Outlet concentration (ppm) | Degree of absorption (%) |
| Example 1 | 87 | 0 – 10 | 89 |
| Example 2 | 82 | 0 – 5 | 94 |
| Example 3 | 75 | 0 – 8 | 89 |
| Example 4 | 84 | 0 – 3 | 96 |
| Example 5 | 79 | 0 – 5 | 94 |
| Reference Example 2 | 80 | 0 – 2 | 98 |

The degree of CO$_2$ absorption was in the range of about 60-90%. It can be seen from Table 2 above that, although a feed gas having an SO$_2$ concentration of 75-87 ppm prior to treatment was used, SO$_2$ was absorbed into the HA solution and its outlet concentration was reduced to 10 ppm or less in all cases. On the basis of these results, it can naturally be expected that, if a feed gas having an SO$_2$ concentration of 5-10 ppm prior to treatment is used, its outlet concentration after treatment will be reduced to less than the limit of detection (i.e., 1 ppm or less).

**Claims**

1.  A method for the removal of $CO_2$ and $SO_x$ contained in combustion exhaust gas which comprises a high-performance desulfurization step for desulfurizing $SO_x$-containing combustion exhaust gas until the $SO_x$ concentration in the desulfurized gas comes within the range of 5 to 10 ppm, and a decarbonation step for bringing the desulfurized gas into contact with an aqueous solution of an alcoholic hydroxyl-containing hindered amine to remove not only $CO_2$ but also $SO_x$ so that the $SO_x$ concentration in the decarbonated gas is reduced to 1 ppm or less.

2.  A method for the removal of $CO_2$ and $SO_x$ contained in combustion exhaust gas as claimed in claim 1 wherein the high-performance desulfurization step is a flue gas desulfurization step based on the wet lime-gypsum process using first and second absorption towers in which the combustion exhaust gas is brought into contact with a gypsum slurry containing 1% or less of calcium carbonate in the first absorption tower and then brought into contact with a gypsum slurry containing 1% or more of calcium carbonate in the second absorption tower.

3.  A method for the removal of $CO_2$ and $SO_x$ contained in combustion exhaust gas as claimed in claim 1 wherein the alcoholic hydroxyl-containing hindered amine is selected from the group consisting of (a) a compound having a primary amino group attached to a tertiary carbon atom having two unsubstituted alkyl groups, (b) a compound having a secondary amino group whose N atom is attached to a group having a chain of 2 or more carbon atoms including the bonding carbon atom, and (c) a compound having a tertiary amino group in which, of the three groups attached to the tertiary amino group, at least one has a chain of 2 or more carbon atoms including the bonding carbon atom and two are unsubstituted alkyl groups.

# F I G. I

A    B    C    D    E    F

# F I G . 2

F I G. 3